# EUROPÄISCHE PATENTSCHRIFT

(11) **EP 0 543 242 B1**
(45) Veröffentlichungstag und Bekanntmachung des Hinweises auf die Patenterteilung: **12.06.1996**
(21) Anmeldenummer: 92119117.7
(22) Anmeldetag: 07.11.1992
(51) Int. Cl.: C08J 9/14

(54) **Verfahren zur Herstellung von Schaumstoffplatten mit hoher Druckfestigkeit**
Process for producing foam plates with high pressure resistance
Procédé de préparation de plaques de mousse à haute résistance à la compression

(30) Priorität: 22.11.1991 DE 4138388
(43) Veröffentlichungstag der Anmeldung: 26.05.1993
(73) Patentinhaber: BASF Aktiengesellschaft, D-67063 Ludwigshafen (DE)
(72) Erfinder: Voelker, Heinz, Dr., W-6703 Limburgerhof (DE); Alicke, Gerhard, W-6520 Worms 1 (DE); Weilbacher, Manfred, Dr., W-6710 Frankenthal (DE); Weber, Reinhold, W-6704 Mutterstadt (DE); Schuch, Horst, Dr., W-6804 Ilvesheim (DE)

(56) Entgegenhaltungen:
- EP-A- 0 464 581
- WO-A-92/06800

## Beschreibung

Gegenstand der Erfindung ist ein Verfahren zur Herstellung von Schaumstoffplatten mit hoher Druckfestigkeit durch Extrusion eines Gemisches aus einem Styrolpolymerisat, einem Treibmittel und gegebenenfalls üblichen Zusatzstoffen.

Für die Herstellung von Schaumstoffen auf Basis von Styrolpolymerisaten ist eine Vielzahl von Treibmitteln vorgeschlagen worden. Bevorzugt wird Methylchlorid verwendet. wegen seiner Toxizität sind jedoch extreme Vorsichtsmaßnahmen sowohl bei der Herstellung als auch bei Nachlagerung des Schaumstoffs erforderlich. Der Schaumstoff zeigt zudem bei erhöhten Temperaturen ein beträchtliches Schwindungsverhalten. Bei Verwendung von Chlorfluorkohlenwasserstoffen, wie Dichlordifluormethan, als Treibmittel erhält man Schaumstoffe, die sich bei erhöhten Temperaturen ausdehnen. Gemische aus etwa gleichen Teilen Methylchlorid und Dichlordifluormethan führen zwar zu dimensionsstabilen Schaumstoffen, wegen der Toxizität des Methylchlorids verbietet sich jedoch ihr Einsatz. Ersetzt man Methylchlorid durch das etwas weniger toxische Ethylchlorid, so entsteht ein relativ weicher Schaum mit niedriger Druckfestigkeit. Auch Kohlendioxid ist bereits als Treibmittel empfohlen worden. Sein Einsatz führt jedoch zu offenzelligen Schaumstoffen, die ein hohes Wasseraufnahmevermögen besitzen.

Aus der EP-A 439 283 gehen Treibmittelmischungen hervor, die aus einer Mischung von (a) perfluorierten oder partiell fluorierten (Cyclo)alkanen und (b) einem oder mehreren aus der Gruppe der Fluorchlorkohlenwasserstoffe, Fluorkohlenwasserstoffe und einem niedrig siedenden (Cyclo)alkan bestehen.

Die EP-A 406 206 beschreibt thermoplastische Schäume aus Styrolpolymeren, die eine porenbildende Mischung enthalten, die aus Dichlormethan und einem porenbildenden Material aus der Gruppe der Fluorchlorkohlenwasserstoffe, (F 22, F 123, F 124, F 141b, F 142, F 142b), der Fluorkohlenwasserstoffe (F 125, F 134, F 134a, F 143a, F 152a, F 161, F 263, F 272), der Fluorkohlenstoffverbindungen (F 116, F 218), Kohlendioxid und ihren Mischungen besteht.

Die Aufgabe der Erfindung besteht darin, ein Verfahren zur Herstellung von Schaumstoffen aus Styrolpolymerisaten aufzuzeigen, bei dem keine toxischen Treibmittel verwendet werden und das zu Schaumstoffen mit geschlossenen Zellen führt, die nur ein geringes wasseraufnahmevermögen besitzen, die dimensionsstabil sind und eine hohe Druckfestigkeit und Wärmeformbeständigkeit aufweisen. Weiterhin ist es Aufgabe der Erfindung, auf die Verwendung von Dichlordifluormethan im Schaumstoff zu verzichten.

Aus der älteren, aber nachveröffentlichten EP-A 464 581 ist ein Verfahren zur Herstellung von Schaumstoffplatten mit hoher Druckfestigkeit und einem Querschnitt von mindestens 50 cm² durch Extrusion eines Gemisches aus einem Styrolpolymerisat, 5 bis 16 Gew.-%, bezogen auf das Styrolpolymerisat, eines Treibmittels sowie gegebenenfalls üblichen Zusatzstoffen bekannt, bei dem man als Treibmittel ein Gemisch verwendet, welches
a) 3 bis 70 Gew.-% eines Alkohols oder Ketons mit einem Siedepunkt zwischen 56 und 100°C
b) 5 bis 50 Gew.-% Kohlendioxid und
c) 0 bis 90 Gew.-% eines gesättigten C₃- bis C₅-Kohlenwasserstoffs und/oder eines zwischen -30° und +30°C siedenden, Wasserstoff enthaltenden Fluorchlor- oder Fluorkohlenwasserstoffs
enthält. Als Fluorkohlenwasserstoff ist nur Tetrafluorethan namentlich genannt.

Die Aufgabe der Erfindung wird gelöst durch die Verwendung eines Treibmittelgemisches, enthaltend einen Alkohol oder ein Keton mit einem Siedepunkt zwischen 56 und 100°C, Difluorethan, Trifluorethan und/oder Pentafluorethan und gegebenenfalls einen gesättigten C₃- bis C₅-Kohlenwasserstoff sowie ggf. Kohlendioxid. Gegenstand der Erfindung ist somit ein Verfahren zur Herstellung von Schaumstoffplatten mit hoher Druckfestigkeit und einem Querschnitt von mindestens 50 cm² durch Extrusion eines Gemisches aus einem Styrolpolymerisat, 5 bis 16 Gew.-%, bezogen auf das Styrolpolymerisat, eines Treibmittels sowie gegebenenfalls üblichen Zusatzstoffen, bei dem man als Treibmittel ein Gemisch verwendet, welches
a) 3 bis 70 Gew.-% eines Alkohols oder Ketons mit einem Siedepunkt zwischen 56 und 100°C
b) 0 bis 50 Gew.-% Kohlendioxid,
c) 0 bis 88 Gew.-% eines gesättigten C₃- bis C₅-Kohlenwasserstoffs und
d) 2 bis 90 Gew.-% Difluorethan (HFC-152a), Trifluorethan (HFC-143a) oder Pentafluorethan (HFC-125).
enthält.

Styrolpolymerisate im Sinne dieser Erfindung sind Polystyrol und Mischpolymerisate des Styrols, die mindestens 50 Gew.% Styrol einpolymerisiert enthalten. Als Comonomere kommen z.B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Das Treibmittel wird in einer Menge von 5 bis 16 Gew.%, vorzugsweise 7 bis 15 Gew.%, insbesondere 8 bis 14 Gew.%, bezogen auf das Styrolpolymerisat, verwendet. Es enthält
a) 3 bis 70 Gew.%, vorzugsweise 5 bis 60 Gew.% eines Alkohols oder Ketons mit einem Siedepunkt zwischen 56 und 100°, vorzugsweise zwischen 56 und 85°C, wie Methanol, Ethanol, Propanol, Isopropanol, tert.-Butanol, Isobutanol, Aceton und Butanon, besonders bevorzugt 3 bis 40 Gew.-% Ethanol,
b) 0 bis 50 Gew.-%, vorzugsweise 5 bis 45 Gew.-%, insbesondere 10 bis 40 Gew.-% Kohlendioxid,
c) 0 bis 88 Gew.%, vorzugsweise 10 bis 70 Gew.%, insbesondere 10 bis 60 Gew.% eines gesättigten C₃-C₅-Kohlenwasserstoffs, wie Propan, n-Butan, i-Butan, Neopentan, n-Pentan oder i-Pentan oder deren Gemische, und
d) 2 bis 90 Gew.-% pentafluorethan (HFC-125), Trifluorethan (HFC-143a) oder Difluorethan (HFC-152a).

Die erfindungsgemäßen Fluorkohlenwasserstoffe können einzeln oder in Mischung eingesetzt werden. Bevorzugt werden Fluorkohlenwasserstoffmischungen eingesetzt, die mindestens Difluorethan enthalten. Besonders bevorzugt sind hierbei Fluorkohlenwasserstoffmischungen, die überwiegend Difluorethan enthalten, oder aber ausschließlich Difluorethan.

Als übliche Zusatzstoffe können dem Styrolpolymerisat-Treibmittel-Gemisch Antistatika, Stabilisatoren, Farbstoffe, Schmiermittel, Füllstoffe, Flammschutzmittel und/oder Keimbildner in üblichen Mengen zugesetzt werden.

Die Herstellung der Schaumstoffplatten erfolgt erfindungsgemäß in an sich bekannter weise durch Extrusion. In einem Extruder wird das durch Erwärmen plastifizierte Styrolpolymerisat mit dem Treibmittelgemisch und den Zusatzstoffen innig vermischt. Das Gemisch durchläuft sodann eine Beruhigungszone, in der es unter ständigem Rühren auf eine Temperatur zwischen etwa 100 und 120°C gekühlt und anschließend durch eine Düse zu Platten extrudiert wird.

Erfindungsgemäß weisen die Schaumstoffplatten einen Querschnitt von mindestens 50 cm², vorzugsweise mindestens 100 bis zu etwa 1000 cm² auf. Die Erfindung erlaubt die Herstellung von Platten der Dicke bis 200 mm, einer Breite bis 1200 mm und einer Dichte von 25 bis 60 g/l.

Die Erfindung wird anhand der folgenden Beispiele erläutert. Die in den Beispielen genannten Teile sind Gewichtsteile.

### Beispiel 1

100 Teile Polystyrol mit einem Schmelzindex von 4,5, 1,5 Teile Hexabromcyclododecan als Flammschutzmittel und 1 Teil Talkum zur Regelung der Zellgröße wurden einem Extruder mit einem inneren Schneckendurchmesser von 120 mm kontinuierlich zugeführt. Durch eine in den Extruder angebrachte Einlaßöffnung wurde gleichzeitig ein Treibmittelgemisch aus 28 Gew.-% Ethanol und 72 Gew.-% HFC-152a (insgesamt 12,3 Gew.-%, bezogen auf das Polystyrol) in den Extruder kontinuierlich eingedrückt. Das in dem Extruder gleichmäßig geknetete Gel wurde dann nach einer Verweilzeit von 15 Minuten auf eine Austrittstemperatur von 105°C gekühlt und durch eine 300 mm breite und 1,5 mm weite Düse in die Atmosphäre extrudiert. Der Schaum wurde durch einen mit dem Extruder verbundenen Formkanal geführt, wobei eine geschäumte Polystyrolplatte mit einer Querschnittsgröße von 650 mm x 50 mm entstand. Es wurde eine gleichmäßige, geschlossenzellige und formstabile Schaumstoffplatte erhalten.

### Beispiele 2 bis 7 und Vergleichsbeispiele 8 bis 10.

In den Beispielen 2 bis 7 und den Vergleichsbeispielen 8 bis 10 wurde gearbeitet wie in Beispiel 1, wobei jedoch die in der Tabelle angegebenen Treibmittelgemische und Treibmittelmengen eingesetzt wurden.

Der Schaum wurde ebenfalls durch einen mit dem Extruder verbundenen Formkanal geführt, wobei eine geschäumte Polystyrolplatte mit einer Querschnittsgröße von 650 mm x 50 mm entstand. Das geschäumte Produkt wurde in Stücke mit einer Querschnittsfläche von 600 mm x 50 mm und einer Länge von 1250 mm geschnitten. Geprüft wurden die Proben nach einer Ablagerzeit von 30 Tagen. Der in der Tabelle angegebene λ-Wert wurde aus Messungen nach 6 Monaten auf eine 2jährige Lagerzeit extrapoliert.

Gemessen wurde der λ-Wert (Wärmeleitzahl) nach DIN 52 612, die Schaumstoffdichte nach DIN 53 420, die Zellgröße nach ASTM D 3842-69, die geschlossenen Zellen nach DIN-ISO 4590, die Wasseraufnahme an ganzen Platten nach DIN 53 434, die Druckfestigkeit nach DIN 53 421 und die Dimensionsstabilität nach DIN 53 431.

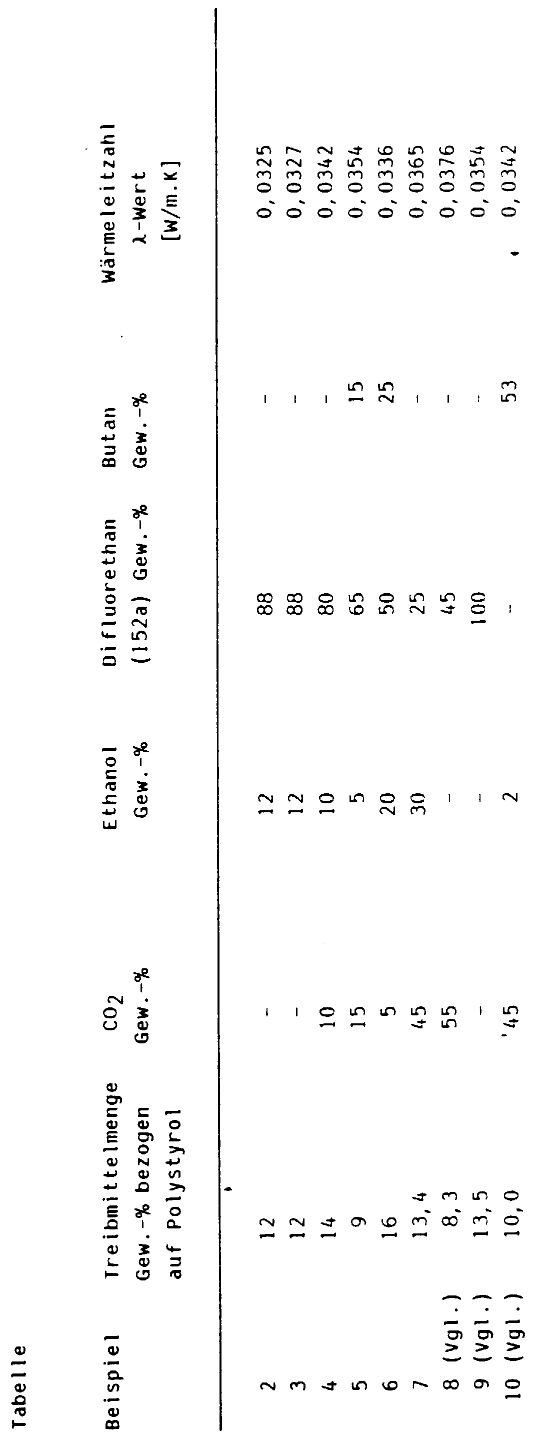

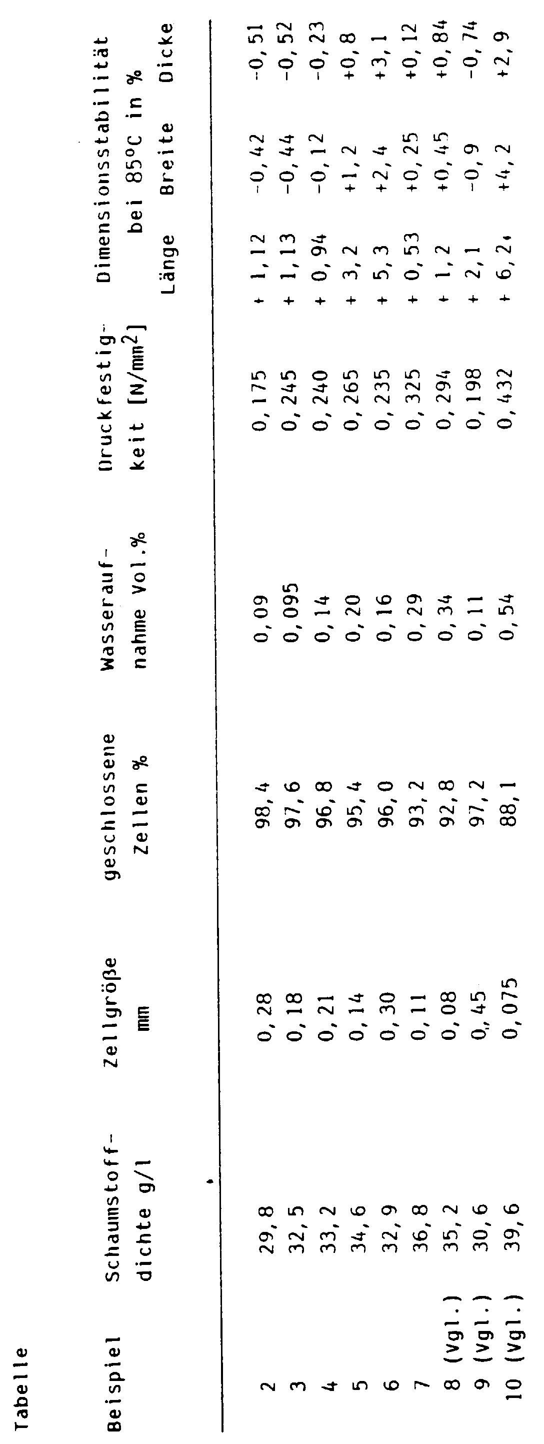

## Patentansprüche

1. Verfahren zur Herstellung von Schaumstoffplatten mit hoher Druckfestigkeit und einem Querschnitt von mindestens 50 cm² durch Extrusion eines Gemisches aus einem Styrolpolymerisat, 5 bis 16 Gew.-%, bezogen auf das Styrolpolymerisat, eines Treibmittels sowie gegebenenfalls üblichen Zusatzstoffen, wobei man als Treibmittel ein Gemisch verwendet, welches
a) 3 bis 70 Gew.-% eines Alkohols oder Ketons mit einem Siedepunkt zwischen 56 und 100°C,
b) 0 bis 50 Gew.-% Kohlendioxid,
c) 0 bis 88 Gew.-% eines gesättigten C₃- bis C₅-Kohlenwasserstoffs und
d) 2 bis 90 Gew.-% Difluorethan (HFC-152a), Trifluorethan (HFC-143a) und/oder Pentafluorethan (HFC-125)
enthält.

2. Verfahren gemäß Anspruch 1, dadurch gekennzeichnet, daß das Treibmittelgemisch 3 bis 40 Gew.-% Ethanol enthält.

3. Verfahren gemäß Anspruch 1, dadurch gekennzeichnet, daß das Treibmittelgemisch als Komponente d) mindestens Difluorethan (HFC-152a) enthält.

4. Verfahren gemäß Anspruch 1, dadurch gekennzeichnet, daß das Treibmittelgemisch als Komponente d) ausschließlich Difluorethan (HFC-152a) enthält.

## Claims

1. A process for the production of foam boards of high compressive strength which have a cross-section of at least 50 cm² by extruding a mixture of a styrene polymer, from 5 to 16% by weight, based on the styrene polymer, of a blowing agent and, if desired, conventional additives, in which the blowing agent used is a mixture which contains
a) from 3 to 70% by weight of an alcohol or ketone having a boiling point of from 56 to 100°C,
b) from 0 to 50% by weight of carbon dioxide,
c) from 0 to 88% by weight of a saturated C₃- to C₅-hydrocarbon and
d) from 2 to 90% by weight of difluoroethane (HFC-152a), trifluoroethane (HFC-143a) and/or pentafluoroethane (HFC-125).

2. A process as claimed in claim 1, wherein the blowing agent mixture contains from 3 to 40% by weight of ethanol.

3. A process as claimed in claim 1, wherein the blowing agent mixture contains, as component d), at least difluoroethane (HFC-152a).

4. A process as claimed in claim 1, wherein the blowing agent mixture contains, as component d), exclusively difluoroethane (HFC-152a).

## Revendications

1. Procédé de fabrication de plaques de matière alvéolaire à résistance à la pression élevée et à section droite d'au moins 50 cm² par extrusion d'un mélange d'un polymérisat de styrène, 5 à 16 % en poids, rapportés au polymérisat de styrène, d'un gonflant, ainsi éventuellement que des additifs usuels, en utilisant comme gonflant un mélange qui contient
a) 3 à 70 % en poids d'un alcool ou de cétone d'un point d'ébullition compris entre 56 et 100°C,
b) 0 à 50 % en poids de dioxyde de carbone,
c) 0 à 88 % en poids d'un hydrocarbure en C3 à C5 saturé et
d) 2 à 90 % en poids de difluoréthane (HFC-152a), trifluoréthane (HFC-143a) et/ou pentafluoréthane (HFC-125).

2. Procédé selon la revendication 1, caractérisé par le fait que le mélange de gonflant contient 3 à 40 % en poids d'éthanol.

3. Procédé selon la revendication 1, caractérisé par le fait que le mélange de gonflant contient comme composant d) au moins du difluoréthane (HFC-152a).

4. Procédé selon la revendication 1, caractérisé par le fait que le mélange de gonflant contient comme composant d) exclusivement du difluoréthane (HFC-152a).
